# EUROPEAN PATENT SPECIFICATION

(11) **EP 4 177 084 B1**
(45) Date of publication and mention of the grant of the patent: **03.04.2024**
(21) Application number: 22198594.8
(22) Date of filing: 29.09.2022
(51) Int. Cl.: B60C 15/06

(54) **PNEUMATIC TYRE**
LUFTREIFEN
PNEUMATIQUE

(30) Priority: 04.11.2021 JP 2021180451
(43) Date of publication of application: 10.05.2023
(73) Proprietor: Sumitomo Rubber Industries, Ltd., Kobe-shi, Hyogo 651-0072 (JP)
(72) Inventor: MIZOKAWA, Hiroki, Kobe-shi, 651-0072 (JP)
(74) Representative: Manitz Finsterwald Patent- und Rechtsanwaltspartnerschaft mbB

(56) References cited:
- EP-A1- 3 118 027
- EP-A1- 3 202 595
- DE-T5-112019 004 940
- JP-A- 2008 110 624
- JP-A- 2019 084 863
- US-A1- 2019 193 484

## Description

### RELATED APPLICATIONS

This application claims the benefit of foreign priority to Japanese Patent Application No. JP2021-180451, filed November 4, 2021.

### FIELD OF THE INVENTION

The present invention relates to a pneumatic tyre.

### BACKGROUND OF THE INVENTION

The following Patent Document 1 discloses a pneumatic tyre expected to have improved durability. A bead apex rubber is arranged in each bead portion in the pneumatic tyre. The bead apex rubber includes a main body apex extending from the outer surface of the bead core in the tyre radial direction and an outer apex arranged outside the main body apex in the tyre axial direction.

### PATENT DOCUMENT

[Patent Document 1] Japanese Unexamined Patent Application Publication 2020-93755

A tyre in accordance with the preamble of claim 1 is known from EP 3 202 595 A1. Related tyres are described in DE 11 2019 004940 T5, US 2019/193484 A1, JP 2019 084863 A, JP 2008 110624 A and EP 3 118 027 A1.

### SUMMARY OF THE INVENTION

As described above, the pneumatic tyre having a so-called outer apex structure has room for improvement in the durability of the bead portion under high load conditions.

The present invention has been made in view of the above circumstances and has a main object to improve bead durability in a pneumatic tyre having an outer apex structure.

The object is solved by a tyre having the features of claim 1. Sub-claims are directed to preferable embodiments of the invention.

In one aspect of the present invention, a pneumatic tyre includes a pair of bead portions, a pair of bead cores each disposed in a respective one of the bead portions, and a carcass extending between the pair of bead cores. The carcass includes a carcass ply including a main portion extending between the pair of bead cores and a pair of turn-up portions each turned up around a respective one of the bead cores from inside to outside of the tyre in a tyre axial direction and extending outwardly in a tyre radial direction. In at least one of the pair of bead portions, a reinforcing rubber layer is disposed outwardly and adjacently in the tyre axial direction of the turn-up portion. The reinforcing rubber layer includes a first rubber layer and a second rubber layer arranged outwardly in the tyre axial direction of the first rubber layer. A loss tangent tan61 of the first rubber layer is smaller than a loss tangent tan62 of the second rubber layer, wherein the loss tangent values are measured under the following conditions using a viscoelastic spectrometer in accordance with the provisions of JIS K6394 "Rubber, vulcanized or thermoplastic-determination of dynamic properties-General guidance", Initial distortion: 10%, Amplitude: plus/minus 2%, Frequency: 10 Hz, Deformation mode: Tension and Temperature: 70 degrees C.

According to an embodiment of the invention, a complex elastic modulus E*2 of the second rubber layer is larger than a complex elastic modulus E*1 of the first rubber layer, wherein the values of the complex elastic modulus are measured under the following conditions using a viscoelastic spectrometer in accordance with the provisions of JIS K6394 "Rubber, vulcanized or thermoplastic-determination of dynamic properties-General guidance", Initial distortion: 10%, Amplitude: plus/minus 2%, Frequency: 10 Hz, Deformation mode: Tension and Temperature: 70 degrees C.

According to an embodiment of the invention, the complex elastic modulus E*2 of the second rubber layer is equal to or more than 150% of the complex elastic modulus E*1 of the first rubber layer.

According to an embodiment of the invention, an innermost end in the tyre radial direction of the reinforcing rubber layer is located within 10 mm in the tyre radial direction from an outermost end of the bead core in the tyre radial direction.

According to an embodiment of the invention, a height in the tyre radial direction from a bead baseline to an outermost end of the reinforcing rubber layer is equal to or more than 25% of a tyre cross-sectional height.

According to an embodiment of the invention, a thickness of the second rubber layer is greater than a thickness of the first rubber layer.

According to an embodiment of the invention, an outermost end in the tyre radial direction of the first rubber layer is located outwardly in the tyre radial direction of an outermost end in the tyre radial direction of the second rubber layer.

According to an embodiment of the invention, an innermost end in the tyre radial direction of the first rubber layer is located inwardly in the tyre radial direction of an innermost end in the tyre radial direction of the second rubber layer.

### SUMMARY OF THE INVENTION

FIG. 1 is a tyre meridian cross-sectional view of a pneumatic tyre according to an embodiment of the present invention; and
FIG. 2 is an enlarged view of a bead portion of FIG. 1.

### DETAILED DESCRIPTION OF THE INVENTION

Hereinafter, an embodiment of the present invention will be described with reference to the drawings.

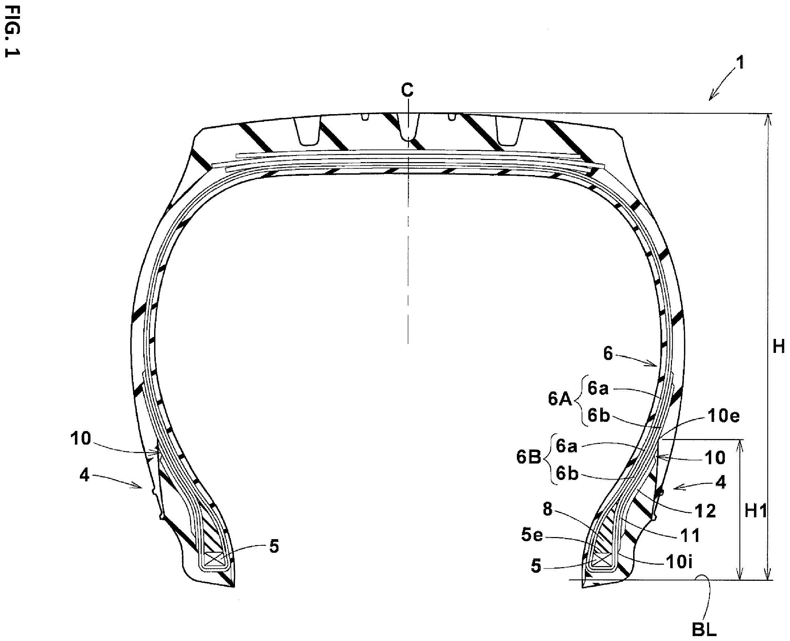

FIG. 1 is a tyre meridian cross-sectional view including the tyre axis of a pneumatic tyre (hereafter, it may be simply referred to as "tyre") 1 under a normal state according to an embodiment of the present invention. The present invention, for example, may be used in tyres 1 for commercial vehicles and light trucks. However, the present invention may also be used for tyres for passenger cars or heavy-duty vehicles.

As used herein, the "normal state" is such that the tyre 1 is mounted onto a standard wheel rim (not illustrated) with a standard pressure but loaded with no tyre load. Unless otherwise noted, dimensions of portions of the tyre 1 are values measured under the normal state.

As used herein, the "standard wheel rim" is a wheel rim officially approved for each tyre by standards organizations on which the tyre is based, wherein the standard wheel rim is the "standard rim" specified in JATMA, the "Design Rim" in TRA, and the "Measuring Rim" in ETRTO, for example.

As used herein, the "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

As illustrated in FIG. 1, the tyre 1 according to the present embodiment of the invention includes a pair of bead portions 4, a pair of bead cores 5 each disposed in a respective one of the bead portions 4, and a carcass extending between the bead cores 5.

The carcass 6 includes a carcass ply 6A which includes a main portion 6a extending between the bead cores 5 and a pair of turn-up portions 6b each turned up around a respective one of the bead cores 5 from inside to outside of the tyre in the tyre axial direction and extending outwardly in the tyre radial direction. The carcass 6, in the present embodiment of the invention, is composed of two carcass plies 6A and 6B which are superimposed with each other in the tyre radial direction. Each carcass ply 6A and 6B includes the main portion 6a and the pair of turn-up portions 6b. The carcass 6, for example, may be composed of a single carcass ply 6A (not illustrated).

In at least one of the pair of bead portions 4, a reinforcing rubber layer 10 is disposed outwardly and adjacently in the tyre axial direction of the turn-up portion 6b. The reinforcing rubber layer 10 can enhance the rigidity of the bead portion 4, improving durability thereof. In the present embodiment of the invention, the reinforcing rubber layer 10 is arranged in each bead portion 4. Each reinforcing rubber layer 10, for example, is adjacent to an outer surface in the tyre axial direction of each turn-up portion 6b of the radially inner carcass ply 6A.

Each reinforcing rubber layer 10 includes a first rubber layer 11 and a second rubber layer 12 arranged outwardly in the tyre axial direction of the first rubber layer 11. Further, a loss tangent tanδ1 of the first rubber layer 11 is smaller than a loss tangent tan62 of the second rubber layer 12. Thus, the first rubber layer 11 has a small hysteresis loss, which can suppress its heat generation. This can prevent the carcass plies 6A and 6B from being damaged by heat. In addition, the second rubber layer 12 has the basic effect of suppressing the distortion of the bead portions 4. Thus, the durability performance of the tyre can be greatly improved.

In order to effectively exert the above-mentioned effects, the loss tangent tanδ1, for example, is preferably equal to or more than 0.07, more preferably equal to or more than 0.12, but preferably equal to or less than 0.17, more preferably equal to or less than 0.14. For example, the loss tangent tan61 is preferably equal to or more than 60% of the loss tangent tanδ2, more preferably equal to or more than 70%, but preferably equal to or less than 95% of the loss tangent tanδ2, more preferably equal to or less than 90%.

In this specification, loss tangent tanδ and complex elastic modulus E * described later are values measured under the following conditions using a viscoelastic spectrometer in accordance with the provisions of JIS K6394 "Rubber, vulcanized or thermoplastic-determination of dynamic properties-General guidance".
Initial distortion: 10%
Amplitude: plus/minus 2%
Frequency: 10 Hz
Deformation mode: Tension
Temperature: 70 degrees C
Viscoelastic spectrometer: GABO "Iplexer" (registered trademark)

Preferably, a complex elastic modulus E*2 of the second rubber layer 12 is larger than a complex elastic modulus E*1 of the first rubber layer 11. As a result, the rigidity of the second rubber layer 12, which is located relatively outside in the tyre axial direction, can be increased, the bead distortion can be suppressed under high load conditions, and the bead durability can be improved. When the complex elastic modulus E*2 of the second rubber layer 12 is excessively larger than the complex elastic modulus E*1 of the first rubber layer 11, the heat generated by the second rubber layer 12 may be conducted to the carcass plies 6A and 6B via the first rubber layer 11. Thus, the complex elastic modulus E*2 is preferably equal to or more than 120% of the complex elastic modulus E*1, more preferably equal to or more than 130%, but preferably equal to or less than 200% of the complex elastic modulus E*1, more preferably equal to or less than 190%. Although not particularly limited, the complex elastic modulus E* 1 is preferably equal to or more than 20 MPa, more preferably equal to or more than 30 MPa, but preferably equal to or less than 110 MPa, more preferably equal to or less than 80 MPa.

Preferably, the innermost end 10i in the tyre radial direction of each reinforcing rubber layer 10 is located within 10 mm in the tyre radial direction from the outermost end 5e of the bead core 5 in the tyre radial direction. When the innermost end 10i of the reinforcing rubber layer 10 is located more than 10 mm outward in the tyre radial direction from the outermost end 5e of the bead core 5, it may be difficult to suppress the distortion of the bead part 4. When the innermost end 10i of the reinforcing rubber layer 10 is located more than 10 mm inward in the tyre radial direction from the outermost end 5e of the bead core 5, it may not contribute to the improvement of the rigidity of the bead portion 4, and for example, the mass of the tyre 1 may increase and the rim assembly property may decrease.

Preferably, a height H1 in the tyre radial direction from the bead baseline BL to an outermost end 10e of the reinforcing rubber layer 10 is equal to or more than 25% of the tyre cross-sectional height H. As a result, the rigidity of a portion where the bead portion 4 is greatly distorted can be surely increased. When the height H1 is excessively large, it may lead to an increase in tyre mass, for example. From this point of view, the height H1 is more preferably equal to or more than 30%, but preferably equal to or less than 50%, more preferably equal to or less than 45% of the tyre cross-sectional height H.

As used herein, the "bead baseline BL" is the tyre axial line passing through the rim diameter (see JATMA) position determined by the standard based on the tyre 1. Also, the "tyre cross-sectional height H" is the distance in the tyre radial direction from the bead baseline BL to the outermost position of the tyre in the tyre radial direction.

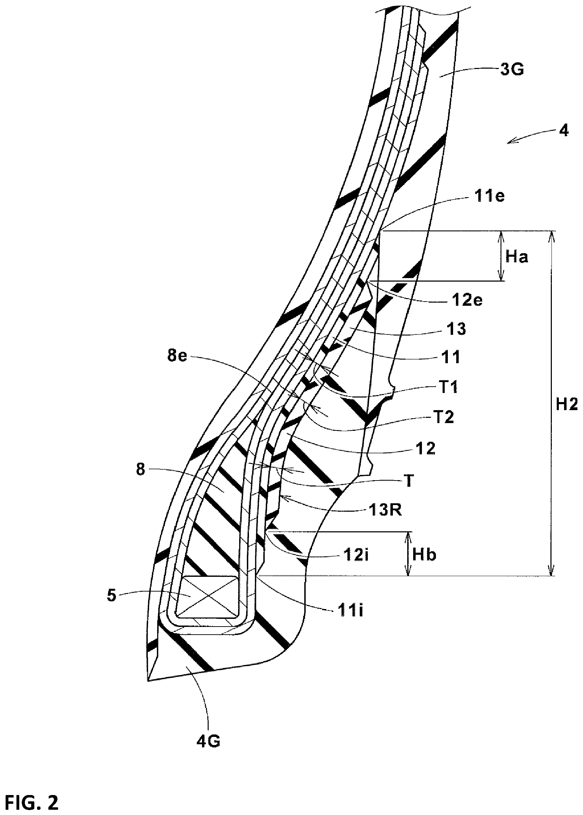

FIG. 2 is an enlarged view of one of the bead portions 4 of FIG. 1. As illustrated in FIG. 2, the first rubber layer 11 and the second rubber layer 12, for example, are formed of sheet-shaped rubber members 13. In other words, the reinforcing rubber layer 10 according to the present embodiment of the invention is formed as a laminated body 13R in which the sheet-shaped rubber members 13 are laminated in the tyre axial direction. Such a reinforcing rubber layer 10 can increase the rigidity of the bead portion 4 and suppress a large increase in mass.

Each of the sheet-shaped rubber members 13, for example, has a constant thickness T in more than 90% of its length. The reinforcing rubber layer 10 formed of such rubber members 13 can be able to have high rigidity so that the durability of the bead portion 4 can be improved. As used herein, the above-mentioned "constant thickness" includes a portion where the thickness changes by 0.2 mm/mm or less in the direction orthogonal to the thickness of the sheet-shaped rubber member 13.

Preferably, a thickness T2 of the second rubber layer 12 is greater than a thickness T1 of the first rubber layer 11. As a result, the reinforcing rubber layer 10 has greater rigidity, and thus the durability performance can further be improved. Although not particularly limited, the thickness T2 of the second rubber layer 12 is preferably equal to or more than 130% of the thickness T1 of the first rubber layer 11, more preferably equal to or more than 140%, but preferably equal to or less than 170% of the thickness T1 of the first rubber layer 11, more preferably equal to or less than 160%. The thickness T2 of the second rubber layer 12 is preferably equal to or more than 1.0 mm, more preferably equal to or more than 1.2 mm, but preferably equal to or less than 2.5 mm, more preferably equal to or less than 2.0 mm.

Preferably, the outermost end 11e in the tyre radial direction of the first rubber layer 11 is located outwardly in the tyre radial direction of the outermost end 12e in the tyre radial direction of the second rubber layer 12. Such a first rubber layer 11 can effectively suppress the heat generated by the second rubber layer 12 from being conducted to the carcass 6. A separation distance Ha in the tyre radial direction between the outermost end 11e of the first rubber layer 11 and the outermost end 12e of the second rubber layer 12 is preferably equal to or more than 2% of a tyre radial length H2 of the first rubber layer 11, more preferably equal to or more than 5%, but preferably equal to or less than 20% of the tyre radial length H2 of the first rubber layer 11, more preferably equal to or less than 10%.

In the present embodiment of the invention, in order to exert the same effect, the innermost end 11i in the tyre radial direction of the first rubber layer 11 is located inwardly in the tyre radial direction of the innermost end 12i of the second rubber layer 12. A separation distance Hb in the tyre radial direction between the innermost end 11i of the first rubber layer 11 and the innermost end 12i of the second rubber layer 12 is preferably equal to or more than 2% of the tyre radial length H2 of the first rubber layer 11, more preferably equal to or more than 5%, but preferably equal to or less than 20% of the tyre radial length H2 of the first rubber layer 11, more preferably equal to or less than 10%.

Each bead portion 4 according to the present embodiment of the invention is provided with a bead apex rubber 8 extending outwardly in the tyre radial direction from the bead core 5 and a clinch rubber 4G arranged outwardly in the axial direction of the reinforcing rubber layer 10. In addition, a sidewall rubber 3G is arranged outwardly in the tyre axial direction of the clinch rubber 4G, for example. The sidewall rubber 3G and the clinch rubber 4G form an outer surface of the tyre.

In each bead portion 4, the bead apex rubber 8 is formed in a triangular shape, for example, in a tyre meridian cross-sectional view. Although not particularly limited, the first rubber layer 11 and the second rubber layer 12 are arranged at the height position in the tyre radial direction of the outermost end 8e in the tyre radial direction of the bead apex rubber 8.

Preferably, a complex elastic modulus E*3 of each bead apex rubber 8, for example, is larger than the complex elastic modulus E*1 of the first rubber layer 11. Preferably, the complex elastic modulus E*3 of each bead apex rubber 8, for example, is smaller than the complex elastic modulus E*2 of the second rubber layer 12.

The complex elastic modulus E* of sidewall rubber 3G and clinch rubber 4G are both smaller than the complex elastic modulus E* 1 of the first rubber layer 11. This can be helpful to provide basic ride comfort performance.

Although an embodiment of the present invention has been described in detail above, the present invention is not limited to the specific embodiment described above but may be modified within the scope of the appended claims.

### [Example]

Some kinds of pneumatic tyres with the basic structure shown in FIG. 1 were prepared based on the specifications in Table 1. Then, the durability performance of each test tyre was tested. The common specifications of each test tyre and the test method are as follows.

### Durability test:

Each test tyre was run on a drum tester under the following conditions, and the mileage until damage occurred in either one of the bead portions was measured. The test results were shown in Table 1 using an index with Comparative Example 1 as 100. The larger the value, the better.
Tyre size: 225/85R16
Rim: 6.0J
Internal pressure: 220 kPa
Load: 19.84 kN
tanδ1: 0.13
E*1: 30 MPa

The test results are shown in Table 1. In Table 1, "A" indicates a separation distance in the tyre radial direction between the innermost end of the reinforcing rubber layer and the outermost end of the bead core in each bead portion, and the outermost end of the bead core is located outwardly in the tyre radial direction than the innermost end of the reinforcing rubber layer.

**[Table 1]**

| | Comparative ex. 1 | Comparative ex. 2 | Comparative ex. 3 | Ex. 1 | Ex. 2 | Ex. 3 | Ex. 4 | Ex. 5 | Ex. 6 |
|---|---|---|---|---|---|---|---|---|---|
| Number of rubber sheets of reinforcing rubber layer | 1 | 2 | 2 | 2 | 2 | 2 | 2 | 2 | 2 |
| Ratio tanδ1/tanδ2 (%) | - | 100 | 125 | 75 | 90 | 75 | 75 | 75 | 75 |
| Ratio E*2/E*1 (%) | - | 100 | 80 | 180 | 180 | 130 | 180 | 180 | 180 |
| Separation distance A (mm) | 8 | 8 | 8 | 8 | 8 | 8 | 12 | 8 | 8 |
| Ratio H1/H (%) | 30 | 30 | 30 | 30 | 30 | 30 | 30 | 20 | 20 |
| First rubber layer thickness T1 (mm) | 1.5 | 1.0 | 1.0 | 1.0 | 1.0 | 1.0 | 1.0 | 1.0 | 1.5 |
| Second rubber layer thickness T2 (mm) | - | 1.5 | 1.5 | 1.5 | 1.5 | 1.5 | 1.5 | 1.5 | 1.0 |
| T1+T2 (mm) | 1.5 | 2.5 | 2.5 | 2.5 | 2.5 | 2.5 | 2.5 | 2.5 | 2.5 |
| Durability test [index] | 100 | 110 | 105 | 150 | 120 | 125 | 130 | 130 | 140 |

As a result of the test, it is confirmed that the tyres of the examples have improved durability performance as compared to the tyres of the comparative examples.

## Claims

1. A pneumatic tyre (1) comprising:
a pair of bead portions (4);
a pair of bead cores (5) each disposed in a respective one of the bead portions (4); and
a carcass (6) extending between the pair of bead cores (5), wherein
the carcass (6) comprises a carcass ply (6A) comprising a main portion (6a) extending between the pair of bead cores (5) and a pair of turn-up portions (6b) each turned up around a respective one of the bead cores (5) from inside to outside of the tyre (1) in a tyre axial direction and extending outwardly in a tyre radial direction,
in at least one of the pair of bead portions (4), a reinforcing rubber layer (10) is disposed outwardly and adjacently in the tyre axial direction of the turn-up portion (6b), and
the reinforcing rubber layer (10) comprises a first rubber layer (11) and a second rubber layer (12) arranged outwardly in the tyre axial direction of the first rubber layer (11),
**characterized in that**
a loss tangent tan61 of the first rubber layer (11) is smaller than a loss tangent tan62 of the second rubber layer (12), wherein the loss tangent values are measured under the following conditions using a viscoelastic spectrometer in accordance with the provisions of JIS K6394 "Rubber, vulcanized or thermoplastic-determination of dynamic properties-General guidance", Initial distortion: 10%, Amplitude: plus/minus 2%, Frequency: 10 Hz, Deformation mode: Tension and Temperature: 70 degrees C.

2. The pneumatic tyre (1) according to claim 1, wherein
a complex elastic modulus E*2 of the second rubber layer (12) is larger than a complex elastic modulus E*1 of the first rubber layer (11), wherein the values of the complex elastic modulus are measured under the following conditions using a viscoelastic spectrometer in accordance with the provisions of JIS K6394 "Rubber, vulcanized or thermoplastic-determination of dynamic properties-General guidance", Initial distortion: 10%, Amplitude: plus/minus 2%, Frequency: 10 Hz, Deformation mode: Tension and Temperature: 70 degrees C.

3. The pneumatic tyre (1) according to claim 2, wherein
the complex elastic modulus E*2 of the second rubber layer (12) is equal to or more than 150% of the complex elastic modulus E*1 of the first rubber layer (11).

4. The pneumatic tyre (1) according to any one of claims 1 to 3, wherein
an innermost end (10i) in the tyre radial direction of the reinforcing rubber layer (10) is located within 10 mm in the tyre radial direction from an outermost end (5e) of the bead core (5) in the tyre radial direction.

5. The pneumatic tyre (1) according to any one of claims 1 to 4, wherein
a height (H1) in the tyre radial direction from a bead baseline (BL) to an outermost end (10e) of the reinforcing rubber layer (10) is equal to or more than 25% of a tyre cross-sectional height (H).

6. The pneumatic tyre (1) according to any one of claims 1 to 5, wherein
a thickness (T2) of the second rubber layer (12) is greater than a thickness (T1) of the first rubber layer (11).

7. The pneumatic tyre (1) according to any one of claims 1 to 6, wherein
an outermost end (11e) in the tyre radial direction of the first rubber layer (11) is located outwardly in the tyre radial direction of an outermost end (12e) in the tyre radial direction of the second rubber layer (12).

8. The pneumatic tyre (1) according to any one of claims 1 to 7, wherein
an innermost end (11i) in the tyre radial direction of the first rubber layer (11) is located inwardly in the tyre radial direction of an innermost end (12i) in the tyre radial direction of the second rubber layer (12).

## Patentansprüche

1. Luftreifen (1), umfassend:
ein Paar Wulstabschnitte (4);
ein Paar Wulstkerne (5), die jeweils in einem jeweiligen der Wulstabschnitte (4) angeordnet sind; und
eine Karkasse (6), die sich zwischen dem Paar Wulstkernen (5) erstreckt, wobei
die Karkasse (6) eine Karkasslage (6A) umfasst, die einen Hauptabschnitt (6a), der sich zwischen dem Paar Wulstkernen (5) erstreckt, und ein Paar Umschlagabschnitte (6b) umfasst, die jeweils um einen jeweiligen der Wulstkerne (5) von der Innenseite zur Außenseite des Reifens (1) in einer Reifenaxialrichtung umgeschlagen sind und sich in einer Reifenradialrichtung nach außen erstrecken,
in mindestens einem des Paars Wulstabschnitte (4) eine Verstärkungsgummischicht (10) in der Reifenaxialrichtung außen von und benachbart zu dem Umschlagabschnitt (6b) angeordnet ist, und
die Verstärkungsgummischicht (10) eine erste Gummischicht (11) und eine zweite Gummischicht (12) umfasst, die in der Reifenaxialrichtung außen von der ersten Gummischicht (11) angeordnet ist,
**dadurch gekennzeichnet, dass**
ein Verlusttangens tanδ1 der ersten Gummischicht (11) kleiner als ein Verlusttangens tanδ2 der zweiten Gummischicht (12) ist, wobei die Verlusttangenswerte unter den folgenden Bedingungen unter Verwendung eines Viskoelastizitätsspektrometers gemäß den Vorschriften von JIS K6394 "Rubber, vulcanized or thermoplastic-determination of dynamic properties-General guidance", Anfangsdehnung: 10%, Amplitude: plus/minus 2%, Frequenz: 10 Hz, Verformungsmodus: Spannung und Temperatur: 70 Grad C gemessen werden.

2. Luftreifen (1) nach Anspruch 1, wobei ein komplexer Elastizitätsmodul E*2 der zweiten Gummischicht (12) größer als ein komplexer Elastizitätsmodul E*1 der ersten Gummischicht (11) ist, wobei die Werte des komplexen Elastizitätsmoduls unter den folgenden Bedingungen unter Verwendung eines Viskoelastizitätsspektrometers gemäß den Vorschriften von JIS K6394 "Rubber, vulcanized or thermoplastic-determination of dynamic properties-General guidance", Anfangsdehnung: 10%, Amplitude: plus/minus 2%, Frequenz: 10 Hz, Verformungsmodus: Spannung und Temperatur: 70 Grad C gemessen werden.

3. Luftreifen (1) nach Anspruch 2, wobei der komplexe Elastizitätsmodul E*2 der zweiten Gummischicht (12) gleich oder größer als 150% des komplexen Elastizitätsmoduls E*1 der ersten Gummischicht (11) ist.

4. Luftreifen (1) nach einem der Ansprüche 1 bis 3, wobei ein innerstes Ende (10i) in der Reifenradialrichtung der Verstärkungsgummischicht (10) innerhalb von 10 mm in der Reifenradialrichtung von einem äußersten Ende (5e) des Wulstkerns (5) in der Reifenradialrichtung angeordnet ist.

5. Luftreifen (1) nach einem der Ansprüche 1 bis 4, wobei eine Höhe (H1) in der Reifenradialrichtung von einer Wulstbasislinie (BL) zu einem äußersten Ende (10e) der Verstärkungsgummischicht (10) gleich oder größer als 25% einer Reifenquerschnittshöhe (H) ist.

6. Luftreifen (1) nach einem der Ansprüche 1 bis 5, wobei eine Dicke (T2) der zweiten Gummischicht (12) größer als eine Dicke (T1) der ersten Gummischicht (11) ist.

7. Luftreifen (1) nach einem der Ansprüche 1 bis 6, wobei ein äußerstes Ende (11e) in der Reifenradialrichtung der ersten Gummischicht (11) in der Reifenradialrichtung eines äußersten Endes (12e) in der Reifenradialrichtung der zweiten Gummischicht (12) außen angeordnet ist.

8. Luftreifen (1) nach einem der Ansprüche 1 bis 7, wobei ein innerstes Ende (11i) in der Reifenradialrichtung der ersten Gummischicht (11) innen in der Reifenradialrichtung von einem innersten Ende (12i) in der Reifenradialrichtung der zweiten Gummischicht (12) angeordnet ist.

## Revendications

1. Bandage pneumatique (1) comprenant :
une paire de portions de talon (4) ;
une paire d'âmes de talon (5) disposées chacune dans une portion respective des portions de talon (4) ; et
une carcasse (6) s'étendant entre la paire d'âmes de talon (5), dans lequel la carcasse (6) comprend une nappe de carcasse (6A) comprenant une portion principale (6a) s'étendant entre la paire d'âmes de talon (5) et une paire de portions retroussées (6b) retroussées chacune autour d'une âme respective des âmes de talon (5) de l'intérieur à l'extérieur du pneumatique (1) dans une direction axiale du pneumatique et s'étendant vers l'extérieur dans une direction radiale du pneumatique,
dans l'une au moins de la paire de portions de talon (4), une couche de caoutchouc de renforcement (10) est disposée à l'extérieur et d'une manière adjacente dans la direction axiale du pneumatique de la portion retroussée (6b), et
la couche de caoutchouc de renforcement (10) comprend une première couche de caoutchouc (11) et une seconde couche de caoutchouc (12) agencée à l'extérieur dans la direction axiale du pneumatique de la première couche de caoutchouc (11),
**caractérisé en ce que**
une tangente de perte tanδ1 de la première couche de caoutchouc (11) est plus petite qu'une tangente de perte tanδ2 de la seconde couche de caoutchouc (12), les valeurs de tangente de perte étant mesurées dans les conditions suivantes, en utilisant un spectromètre de viscoélasticité conformément aux dispositions de la norme industrielle japonaise JIS K6394 « Rubber, vulcanized or thermoplastic - Détermination of dynamic properties - General guidance » (caoutchouc, vulcanisé ou thermoplastique - détermination de propriétés dynamiques - directives générales) : distorsion initiale : 10 %, amplitude : plus/moins 2 %, fréquence: 10 Hz, mode de déformation : traction, et température : 70 °C.

2. Bandage pneumatique (1) selon la revendication 1, dans lequel un module d'élasticité complexe E*2 de la seconde couche de caoutchouc (12) est plus grand qu'un module d'élasticité complexe E*1 de la première couche de caoutchouc (11), les valeurs du module d'élasticité complexe étant mesurées dans les conditions suivantes, en utilisant un spectromètre de viscoélasticité conformément aux dispositions de la norme industrielle japonaise JIS K6394 « Rubber, vulcanized or thermoplastic - Détermination of dynamic properties - General guidance » (caoutchouc, vulcanisé ou thermoplastique - détermination de propriétés dynamiques - directives générales) : distorsion initiale : 10 %, amplitude : plus/moins 2 %, fréquence : 10 Hz, mode de déformation : traction, et température : 70 °C.

3. Bandage pneumatique (1) selon la revendication 2, dans lequel
le module d'élasticité complexe E*2 de la seconde couche de caoutchouc (12) est égal ou supérieur à 150 % du module d'élasticité complexe E*1 de la première couche de caoutchouc (11).

4. Bandage pneumatique (1) selon l'une quelconque des revendications 1 à 3, dans lequel
une extrémité la plus à l'intérieur (10i) dans la direction radiale du pneumatique de la couche de caoutchouc de renforcement (10) est située à l'intérieur de 10 mm dans la direction radiale du pneumatique par rapport à une extrémité la plus à l'extérieur (5e) de l'âme de talon (5) dans la direction radiale du pneumatique.

5. Bandage pneumatique (1) selon l'une quelconque des revendications 1 à 4, dans lequel
une hauteur (H1) dans la direction radiale du pneumatique depuis une ligne de base de talon (BL) jusqu'à une extrémité la plus à l'extérieur (10e) de la couche de caoutchouc de renforcement (10) est égale ou supérieure à 25 % d'une hauteur de section transversale du pneumatique (H).

6. Bandage pneumatique (1) selon l'une quelconque des revendications 1 à 5, dans lequel
une épaisseur (T2) de la seconde couche de caoutchouc (12) est plus grande qu'une épaisseur (T1) de la première couche de caoutchouc (11).

7. Bandage pneumatique (1) selon l'une quelconque des revendications 1 à 6, dans lequel
une extrémité la plus à l'extérieur (11e) dans la direction radiale du pneumatique de la première couche de caoutchouc (11) est située à l'extérieur dans la direction radiale du pneumatique d'une extrémité la plus à l'extérieur (12e) dans la direction radiale du pneumatique de la seconde couche de caoutchouc (12).

8. Bandage pneumatique (1) selon l'une quelconque des revendications 1 à 7, dans lequel
une extrémité la plus à l'intérieur (11i) dans la direction radiale du pneumatique de la première couche de caoutchouc (11) est située à l'intérieur dans la direction radiale du pneumatique d'une extrémité la plus à l'intérieur (12i) dans la direction radiale du pneumatique de la seconde couche de caoutchouc (12).
